# EUROPEAN PATENT APPLICATION

(11) **EP 4 737 292 A1**
(43) Date of publication of application: **06.05.2026**
(21) Application number: 24831612.7
(22) Date of filing: 06.06.2024
(51) Int. Cl.: B62M 6/45, B62J 45/00, B62J 45/411, B62J 45/412, B62J 45/413, B62J 45/414, B62J 50/21

(54) **STATE ESTIMATING SYSTEM AND STATE ESTIMATING METHOD**

(30) Priority: 29.06.2023 JP 2023106826
(71) Applicant: Panasonic Intellectual Property Management Co., Ltd., Kadoma-shi, Osaka 571-0057 (JP)
(72) Inventor: KANAMORI, Keita, kadoma-shi, Osaka 571-0057 (JP)
(74) Representative: Appelt, Christian W.
(86) International application number: PCT/JP2024/020695
(87) International publication number: WO 2025/004742

(57) **Abstract**

A state estimating system (1) includes an obtainer (41) and an estimator (42). The obtainer (41) obtains vibration information about vibration of a vehicle that is either a human-powered vehicle or an electric bicycle (2). The estimator (42) estimates a state of the vehicle based on the vibration information obtained by the obtainer (41). When the vehicle is determined to be in an abnormal state, the estimator (42) outputs abnormal state information indicating that the vehicle has an abnormality. When the vehicle is determined to be in a normal state, the estimator (42) outputs normal state information indicating that the vehicle has no abnormality.

## Description

### [Technical Field]

The present disclosure relates to a state estimating system and a state estimating method for estimating a state of a vehicle that is either a human-powered vehicle or an electric bicycle.

### [Background Art]

Patent Literature (PTL) 1 discloses a system for detecting a state of a vehicle body. The system for detecting a state of a vehicle body includes a sensor and an analyzer. The sensor obtains vehicle body travel information, which is information about travel of a vehicle body. The analyzer obtains the vehicle body travel information from the sensor, and estimates, based on the obtained vehicle body travel information, a state of the vehicle body indirectly related to the vehicle body travel information.

### [Citation List]

### [Patent Literature]

[PTL 1]
WO2022/071228

### [Summary of Invention]

### [Technical Problem]

An object of the present disclosure is to provide a state estimating system and a state estimating method capable of easily eliminating the need for a sensor for directly detecting a state of a vehicle.

### [Solution to Problem]

In order to achieve the object described above, a state estimating system according to an aspect of the present disclosure includes an obtainer and an estimator. The obtainer obtains vibration information about vibration of a vehicle that is either a human-powered vehicle or an electric bicycle. The estimator estimates a state of the vehicle based on the vibration information obtained by the obtainer. When the vehicle is determined to be in an abnormal state, the estimator outputs abnormal state information indicating that the vehicle has an abnormality. When the vehicle is determined to be in a normal state, the estimator outputs normal state information indicating that the vehicle has no abnormality.

A state estimating method according to an aspect of the present disclosure includes: obtaining vibration information about vibration of a vehicle that is either a human-powered vehicle or an electric bicycle; and estimating a state of the vehicle based on the vibration information obtained. In the state estimating method, when the vehicle is determined to be in an abnormal state, abnormal state information indicating that the vehicle has an abnormality is outputted. When the vehicle is determined to be in a normal state, normal state information indicating that the vehicle has no abnormality is outputted.

### [Advantageous Effects of Invention]

The state estimating system, etc., according to the present disclosure provide an advantage of being able to easily eliminate the need for the sensor for directly detecting the state of the vehicle.

### [Brief Description of Drawings]

[FIG. 1]

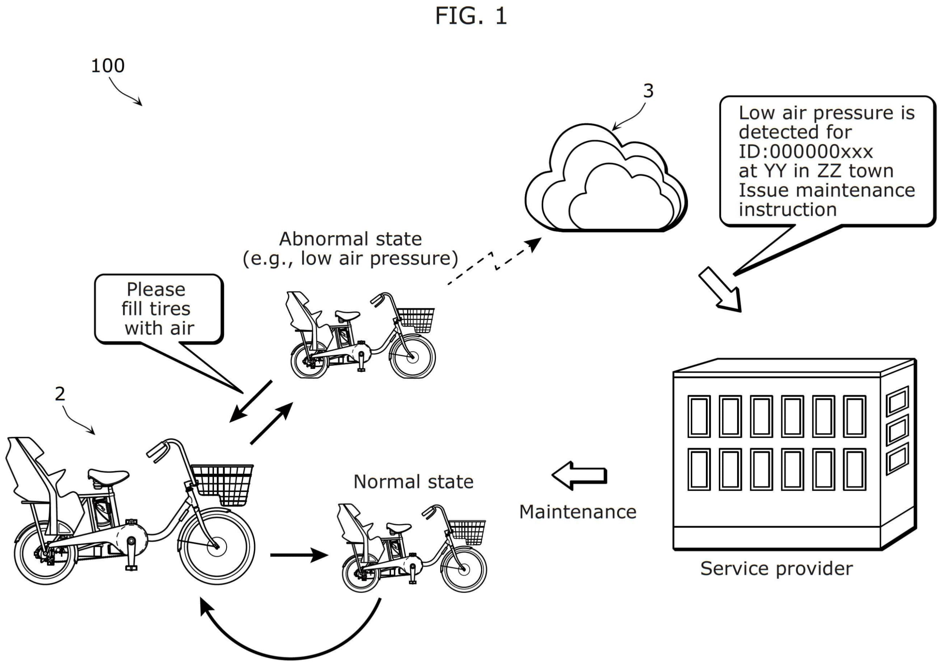

   FIG. 1 is a schematic diagram illustrating a vehicle sharing system according to an embodiment.
[FIG. 2]

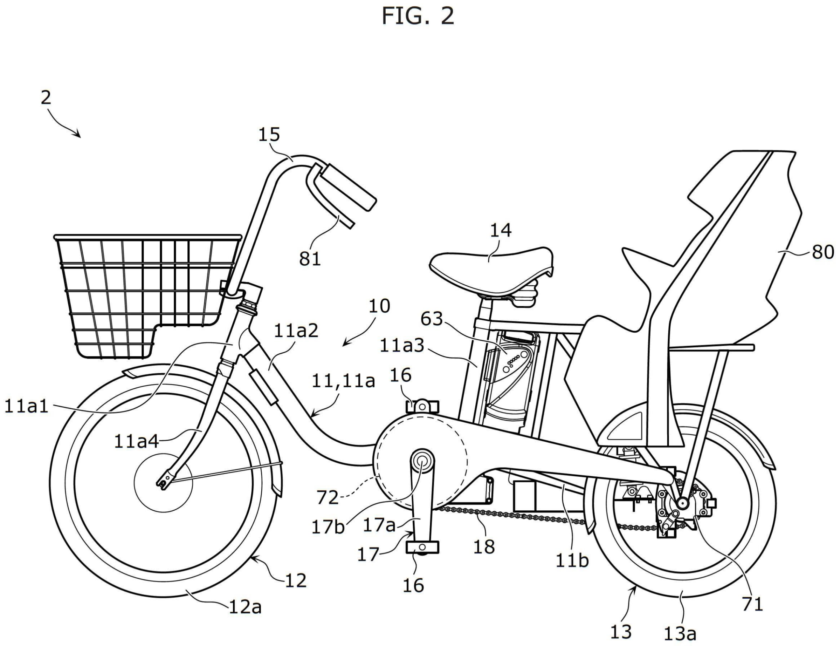

   FIG. 2 is a side view illustrating an electric bicycle according to the embodiment.
[FIG. 3]

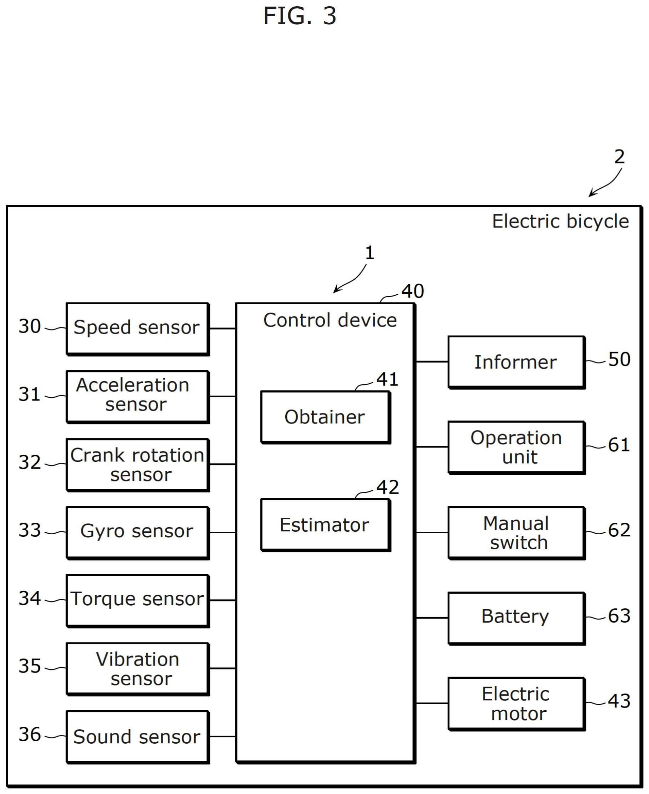

   FIG. 3 is a block diagram illustrating the electric bicycle according to the embodiment.
[FIG. 4]

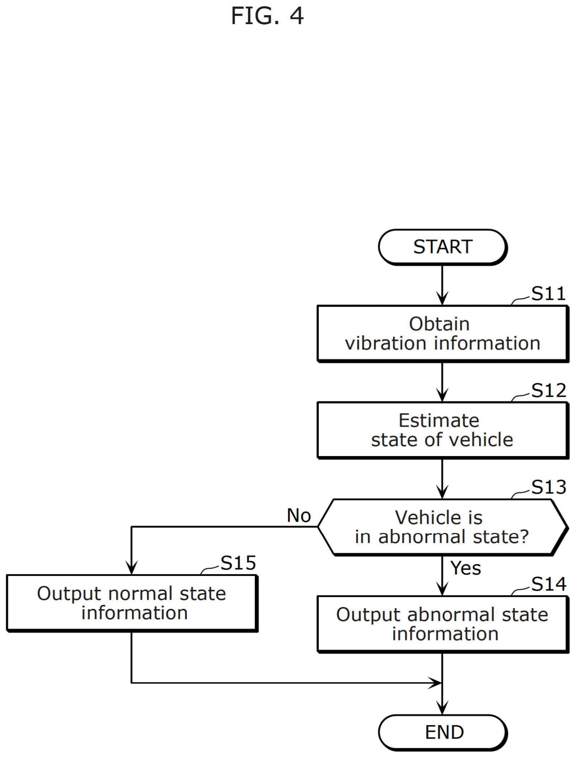

   FIG. 4 is a flowchart showing an example of operations of a state estimating system according to the embodiment.

### [Description of Embodiments]

An embodiment of the present disclosure will be described below in detail using the drawings. Note that the embodiment described below shows a specific example of the present disclosure. Thus, the numerical values, shapes, materials, elements, the arrangement and connection of the elements, steps, the processing order of the steps, etc. shown in the following embodiment are mere examples, and therefore do not limit the scope of the present disclosure. Among the elements in the following embodiment, those not recited in any one of the independent claims are therefore described as optional elements.

Each of the figures is a schematic diagram and is not necessarily drawn in a strict sense. Therefore, the scale, for example, is not necessarily the same in these figures. In addition, substantially the same configurations are denoted by the same reference numeral throughout the figures, and redundant descriptions will be omitted or simplified.

A state estimating system and a state estimating method according to an embodiment will be described below.

### [Embodiment]

### (Configuration)

A configuration of vehicle sharing system 100 will be described first with reference to FIG. 1. FIG. 1 is a schematic diagram illustrating vehicle sharing system 100 according to the embodiment.

As shown in FIG. 1, in vehicle sharing system 100, a service provider that provides, for example, vehicle rental services can, for example, rent a vehicle to a user who wishes to use the vehicle. Vehicle sharing system 100 manages, for example, states of vehicles, specifications, vehicle types, and product numbers. In addition, when renting a vehicle to a user, vehicle sharing system 100 manages, for example, the time of commencement of use, the time of termination of use, the location of the commencement of use, and the identification information of the user. In the embodiment, vehicle sharing system 100 provides, for example, a rental service of electric bicycles 2 as vehicles.

Electric bicycle 2 is a vehicle capable of traveling on a running surface by electric power, e.g., a power assisted bicycle, or a specified small motorized bicycle such as what is called an e-scooter. Electric bicycle 2 may be a vehicle that requires no driver's license for a user. In the embodiment, electric bicycle 2 is a two-wheeled bicycle having two wheels, i.e., a front wheel and a rear wheel, but electric bicycle 2 is not limited to this. For example, electric bicycle 2 may be a three-wheeled bicycle in which one of a front wheel or a rear wheel is one-wheeled and the other of the front wheel or the rear wheel is two-wheeled.

Here, the vehicle is not limited to electric bicycle 2, but may be a human-powered vehicle in which wheels are powered by a pedal force. Examples of the human-powered vehicle may include a bicycle. As mentioned above, the power assisted bicycle is classified as electric bicycle 2, but may be classified as a human-powered vehicle. Thus, the vehicle in the embodiment is either the human-powered vehicle or electric bicycle 2. The following description assumes that the vehicle is electric bicycle 2 as an example.

Vehicle sharing system 100 includes electric bicycle 2 and external device 3. Electric bicycle 2 employing state estimating system 1 will be described below, and then external device 3 will be described.

### [Electric Bicycle]

FIG. 2 is a side view illustrating electric bicycle 2 according to the embodiment. FIG. 3 is a block diagram illustrating electric bicycle 2 according to the embodiment. As shown in FIGS. 2 and 3, electric bicycle 2 is a vehicle capable of traveling on a running surface by rotation of wheels. In the embodiment, electric bicycle 2 is a power assisted bicycle in which a pedal force exerted by a user is assisted by an auxiliary driving force of electric motor 43. In electric bicycle 2, a human-powered driving force for which the wheels are powered by the pedal force and the auxiliary driving force for which the wheels are powered by electric motor 43 may be independent of each other. Electric bicycle 2 may thus be a bicycle capable of traveling (capable of being self-propelled) only with electric motor 43.

For example, electric bicycle 2 has an assist mode, a walking mode, and a self-propelled mode. The assist mode is a mode to assist forward movement of electric bicycle 2 based on the pedal force exerted on pedals 16 by the user. The walking mode is a mode to assist, when the user walks electric bicycle 2, forward movement of electric bicycle 2 based on a force exerted by the user to push body 10 forward. The self-propelled mode is a mode to assist forward movement of electric bicycle 2 when the user walks while supporting electric bicycle 2.

Electric bicycle 2 is configured to include body 10 equipped with state estimating system 1.

Body 10 includes frame 11, front wheel 12, rear wheel 13, saddle 14, handlebar 15, pedals 16, crank 17, chain 18, a derailleur, a sensor, control device 40, electric motor 43, informer 50, operation unit 61, manual switch 62, and battery 63.

Front wheel 12, rear wheel 13, saddle 14, handlebar 15, pedals 16, crank 17, chain 18, the derailleur, the sensor, electric motor 43, control device 40, informer 50, operation unit 61, manual switch 62, and battery 63, for example, are attached to frame 11. Frame 11 is a framework of electric bicycle 2. Frame 11 is made of a metal such as an aluminum alloy, iron, chrome molybdenum steel, steel, or titanium, for example. Note that frame 11 may be made of carbon or a synthetic resin, for example.

Frame 11 includes front frame 11a and rear frame 11b.

Front frame 11a constitutes a front part of frame 11. Front frame 11a includes head tube 11a1, down tube 11a2, and seat tube 11a3. Note that frame 11 may be configured to include a suspension.

Head tube 11a1 is connected to a front end of front frame 11a. Front fork 11a4 and handlebar 15 are attached to head tube 11a1 so as to be rotatable around an axis along a longitudinal direction of head tube 11a1. Front wheel 12 is rotatably attached to front fork 11a4. By turning handlebar 15 to the left or to the right, the direction of front wheel 12 supported by front fork 11a4 can be turned to the left or to the right. In addition, a front light is attached to front fork 11a4. Note that front fork 11a4 may be configured to include a suspension.

Down tube 11a2 connects between head tube 11a1 and seat tube 11a3.

Seat tube 11a3 holds saddle 14. Saddle 14 is attached to seat tube 11a3 so as to be movable along a longitudinal direction of seat tube 11a3. A lower end of seat tube 11a3 is connected to a rear end of down tube 11a2. Seat tube 11a3 is located between front wheel 12 and rear wheel 13 in a front-rear direction. Battery 63 is removably attached to seat tube 11a3.

Rear frame 11b is disposed more rearward than front frame 11a and constitutes a rear part of frame 11. Rear wheel 13, rear sprocket 71 engaged with an axle of rear wheel 13, and rear seat 80 are attached to rear frame 11b. Chain 18 is looped over rear sprocket 71 and front sprocket 72. As a result, a rotative force of front sprocket 72, which has been rotated as a result of pedals 16 being pushed down, is transmitted to rear wheel 13 via chain 18 and rear sprocket 71. In the embodiment, pedals 16, front sprocket 72, rear sprocket 71, and chain 18 together constitute a rear wheel drive mechanism, which relies on human power.

Front wheel 12 includes tire 12a used for body 10 to travel. Front wheel 12 is a front-side wheel of the two wheels aligned in the front-rear direction. Front wheel 12 is supported by front fork 11a4 so as to be rotatable around an axis along a left-right direction. Note that front wheel 12 may receive power transmission from electric motor 43. For example, front wheel 12 may be provided with a motor for providing a driving force to rotate front wheel 12. Front wheel 12 is an example of wheels.

Rear wheel 13 includes tire 13a used for body 10 to travel. Rear wheel 13 is a rear-side wheel of the two wheels aligned in the front-rear direction. Rear wheel 13 is supported by a rear fork so as to be rotatable around an axis along the left-right direction. Note that rear wheel 13 may receive power transmission from electric motor 43. For example, rear wheel 13 may be provided with a motor for providing a driving force to rotate rear wheel 13. Rear wheel 13 is an example of wheels. Note that front wheel 12 and rear wheel 13 may be referred to collectively as a wheel.

Rear wheel 13 includes rear sprocket 71. Rear sprocket 71 is coupled to front sprocket 72 via chain 18. In the embodiment, the power outputted from electric motor 43 is transmitted to rear wheel 13.

Saddle 14 is a part on which the user sits. Saddle 14 is movably attached to seat tube 11a3.

When the user steers electric bicycle 2, for example, handlebar 15 is used to change a steering angle of electric bicycle 2. A pair of grips and a pair of brake levers 81 are provided at both ends of handlebar 15. The pair of grips are parts to be held by the hands of the user when the user rides electric bicycle 2 in a proper posture. Also when the user walks electric bicycle 2 or walks while supporting electric bicycle 2, the pair of grips are held by the hands and receive a forward pushing force. One of brake levers 81 provides a mechanical braking force to front wheel 12 by driving a front braking device (not shown). The other of brake levers 81 provides a mechanical braking force to rear wheel 13 by driving a rear braking device (not shown).

Note that at least one of the pair of grips may be provided with a grip sensor for detecting a gripping force or a pushing force. Note that a steering angle sensor for measuring a steering angle of handlebar 15 may be provided in a rotation shaft provided at a center of handlebar 15, and this steering angle sensor may detect the steering angle of handlebar 15. Note that a brake sensor may be provided on brake lever 81, and this brake sensor may detect an operation to brake lever 81.

When the user rides electric bicycle 2, for example, a pedal force is applied to pedals 16 by the user. Pedal 16 is attached to one of longitudinal ends of each of crank arms 17a that is opposite to crankshaft 17b. Pedal 16 is rotatably attached to crank arm 17a. A rotation shaft of pedal 16 is substantially parallel to a rotation shaft of crankshaft 17b of crank 17.

Crank 17 includes crankshaft 17b, the pair of crank arms 17a, and front sprocket 72.

Crank arms 17a are provided one on each side of front frame 11a and fixed to both ends of crankshaft 17b extending in the left-right direction. One end of crank arm 17a is rotatably fixed to crankshaft 17b, and pedal 16 is rotatably fixed to the other end of crank arm 17a. Front sprocket 72 is attached to crankshaft 17b of crank arms 17a to rotate with rotation of crankshaft 17b. When a pedal force is applied to pedal 16 by the user, crank arm 17a rotates around crankshaft 17b, thereby causing front sprocket 72 to rotate around crankshaft 17b as well. With the rotation of front sprocket 72, the human-powered driving force resulting from the pedal force is transmitted to rear sprocket 71 of rear wheel 13 via chain 18. As a result, rear sprocket 71 is rotated, and rear wheel 13 is thereby rotated. For example, when electric bicycle 2 operates in the assist mode, the human-powered driving force resulting from the pedal force and the auxiliary driving force added to such a human-powered driving force by electric motor 43 are transmitted to rear wheel 13.

Chain 18 transmits, to rear sprocket 71, the rotative force of front sprocket 72, which has been rotated as a result of pedals 16 being pushed down, and the auxiliary driving force outputted from electric motor 43. Chain 18 is a power transmitter such as a belt, a shaft, a wire, or a gear, for example.

The derailleur is configured with a well-known speed change mechanism such as a planetary gear or a multispeed gear having a plurality of driving force transmission paths with gear ratios different from one another. For example, the derailleur can be shifted to a low speed (Low gear), a middle speed (Middle gear), a high speed (Top gear), etc. by being shifted among the driving force transmission paths. The derailleur may be configured to be manually shifted among the driving force transmission paths or electrically shifted among the driving force transmission paths.

The sensor obtains vehicle information about electric bicycle 2. The vehicle information is information indicating a speed of electric bicycle 2 or information indicating an acceleration of electric bicycle 2, for example. The vehicle information may also include information indicating a rotational speed of crank 17, information indicating the human-powered driving force, or information indicating an angular velocity of electric bicycle 2, for example. In the embodiment, electric bicycle 2 is equipped with a plurality of sensors. The plurality of sensors may include speed sensor 30, acceleration sensor 31, crank rotation sensor 32, gyro sensor 33, torque sensor 34, vibration sensor 35, or sound sensor 36, for example.

Speed sensor 30 detects a speed at which electric bicycle 2 is traveling during the execution of the assist mode, the walking mode, or the self-propelled mode. Speed sensor 30 detects the speed of electric bicycle 2 based on a rotational speed of at least one of front wheel 12 or rear wheel 13, and outputs, to control device 40, information indicating the detected speed of electric bicycle 2.

Moreover, speed sensor 30 is, for example, a wheel sensor or a magnet sensor, but may be a cycle computer that performs calculations based on ground speed. Speed sensor 30 may have any configuration as long as the speed of electric bicycle 2 can be detected. Furthermore, speed sensor 30 may be a sensor using Global Positioning System (GPS), for example.

Furthermore, speed sensor 30 may be provided, for example, at a lower end portion of front fork 11a4 so as to be disposed at a position where speed can be easily measured. When speed sensor 30 is provided to front fork 11a4 of front frame 11a, speed sensor 30 can suitably detect the speed of front wheel 12. When speed sensor 30 is attached to rear frame 11b, speed sensor 30 can suitably detect the speed of rear wheel 13. A detection target of speed sensor 30 is at least one of front wheel 12 or rear wheel 13.

Acceleration sensor 31 detects an acceleration of traveling electric bicycle 2. Acceleration sensor 31 detects the acceleration based on, for example, vibrations transmitted to electric bicycle 2 due to the traveling of electric bicycle 2. The acceleration of electric bicycle 2 increases as the vibration generated in electric bicycle 2 becomes greater. Moreover, since the vibration of electric bicycle 2 changes depending on the state of the running surface, acceleration sensor 31 may detect acceleration using a table for vibrations corresponding to the running surface. Acceleration sensor 31 outputs, to control device 40, information indicating the acceleration of electric bicycle 2.

Crank rotation sensor 32 detects the rotational speed of crank 17 per unit time during the execution of the assist mode, the walking mode, or the self-propelled mode. For example, crank rotation sensor 32 is configured to include a gear-shaped rotating body and a photodetector including a light emitting portion and a light receiving portion that are disposed to sandwich teeth of the rotating body. Crank rotation sensor 32 outputs, to control device 40, information indicating the detected rotational speed of crank 17.

Moreover, crank rotation sensor 32 may have any configuration as long as the rotational speed of crank 17 can be detected. In addition, crank rotation sensor 32 is disposed in the vicinity of crankshaft 17b. Instead of crank rotation sensor 32, a crank angle sensor that detects a rotation angle of crank 17 may be used. In the embodiment, a plurality of crank rotation sensors 32 may be provided, and phase differences may be set among respective detection signals of crank rotation sensors 32. In such a case, the phase differences set among the respective detection signals of crank rotation sensors 32 allow for detecting the rotation direction of crank 17 as well.

Gyro sensor 33 is a six-axis sensor that detects a velocity (angular velocity) at which body 10 of electric bicycle 2 tilts. Gyro sensor 33 detects acceleration in each of axial directions of three axes that are orthogonal to the center of electric bicycle 2, as well as angular velocity around the three axes. Gyro sensor 33 detects the acceleration in each of the axial directions of the three axes or the angular velocity (roll, yaw, and pitch) around the three axes. Gyro sensor 33 outputs, to control device 40, information indicating the detected angular velocity and information indicating the acceleration. Gyro sensor 33 is attached to, for example, down tube 11a2. The axial directions of the three axes orthogonal to one another may be represented, for example, by an X-axis direction, a Y-axis direction, and a Z-axis direction, where the X-axis direction may be defined as the front-rear direction, the Y-axis direction may be defined as the left-right direction, and the Z-axis direction may be defined as the up-down direction.

Torque sensor 34 detects a human-powered driving force resulting from the pedal force on pedals 16. More specifically, torque sensor 34 detects a human-powered driving force generated by the rotation of crankshaft 17b that has occurred as a result of the pedal force on pedals 16. Torque sensor 34 is a magnetostrictive sensor including a coil and a magnetostriction generating section. For example, when the human-powered driving force is generated as a result of the pedal force being applied to pedals 16, strain occurs in the magnetostriction generating section. A region where the magnetic permeability is increased and a region where the magnetic permeability is decreased are generated in the magnetostriction generating section. Torque sensor 34 detects the human-powered driving force by detecting a difference in inductance of the coil. Torque sensor 34 outputs, to control device 40, information indicating the detected human-powered driving force. Note that the configuration of torque sensor 34 is not limited to any particular configuration. Torque sensor 34 may have any configuration as long as the human-powered driving force to pedals 16 can be detected. Torque sensor 34 is disposed in the vicinity of crankshaft 17b, for example.

Vibration sensor 35 detects vibration of a target part in body 10. Here, the vibration of the target part to be detected by vibration sensor 35 is different from sound emitted by the target part. Vibration sensor 35 outputs, to control device 40, information indicating the magnitude (frequency) of the vibration of the target part.

Sound sensor 36 detects sound emitted from the target part in body 10. The sound is sound emitted from front sprocket 72, rear sprocket 71, chain 18, the braking devices, tires 12a and 13a, or the derailleur, for example. When an abnormality has occurred in front sprocket 72, rear sprocket 71, chain 18, the braking devices, tires 12a and 13a, or the derailleur, for example, abnormal sound different from sound in a normal state is emitted. Sound sensor 36 outputs, to control device 40, information indicating the sound such as the sound quality and the sound volume.

In the embodiment, acceleration sensor 31, crank rotation sensor 32, speed sensor 30, gyro sensor 33, torque sensor 34, vibration sensor 35, and sound sensor 36 are given as an example of the sensors included in electric bicycle 2. However, the sensors included in electric bicycle 2 are not limited to these.

For example, electric bicycle 2 may further include a tilt sensor that detects a tilt of electric bicycle 2 with respect to a horizontal plane. The tilt sensor may output, to control device 40, information indicating the detected tilt angle.

Electric bicycle 2 may include, for example, a battery sensor that detects a state of battery 63, such as a charging rate, discharge performance, or a remaining capacity of battery 63. The battery sensor detects the state of battery 63 by, for example, detecting at least one of a voltage applied to battery 63 or a current flowing through battery 63. The battery sensor may output, to control device 40, information indicating the detected state of battery 63. The battery sensor is disposed in the vicinity of battery 63, for example.

Furthermore, electric bicycle 2 may include, for example, a motor rotation sensor that detects a rotational speed of electric motor 43 per unit time. The motor rotation sensor may be a Hall IC sensor, for example, and may output, to control device 40, information indicating the rotational speed of electric motor 43 per unit time. Note that the speed of electric bicycle 2 or the auxiliary driving force of electric motor 43, for example, may be calculated based on the information indicating the rotational speed of electric motor 43 per unit time.

Note that electric bicycle 2 may not include any of the above-described sensors other than vibration sensor 35 and sound sensor 36, or may include all of the sensors. Moreover, in addition to vibration sensor 35 and sound sensor 36, electric bicycle 2 may include one or more sensors from among all of the above-described sensors. Furthermore, electric bicycle 2 may include only one of vibration sensor 35 or sound sensor 36.

Electric motor 43 adds an auxiliary driving force to assist the traveling of body 10. Electric motor 43 is driven by receiving electric power from battery 63 according to control by control device 40. Electric motor 43 rotates rear wheel 13 by transmitting rotational torque as the auxiliary driving force to rear sprocket 71 via chain 18. The rotational torque refers to the auxiliary driving force, which is a driving force generated by electric motor 43 to be added to the human-powered driving force, and an auxiliary driving force, which is an auxiliary force to be added to a force for the user to walk electric bicycle 2 or to walk while supporting electric bicycle 2. During the execution of the assist mode, electric motor 43 adds the auxiliary driving force to the human-powered driving force resulting from the pedal force applied to pedals 16. During the execution of the walking mode, electric motor 43 adds the auxiliary driving force to the force for the user to walk electric bicycle 2. During the execution of the self-propelled mode, electric motor 43 adds the auxiliary driving force for electric bicycle 2 to be self-propelled while being supported by the user.

In the embodiment, electric motor 43 is housed, together with control device 40, etc., in a casing made of a resin or a metal so as to be packaged as a unit. Crank rotation sensor 32 and torque sensor 34, for example, are provided inside the casing.

Control device 40 is implemented by a microcomputer (microcontroller), for example. Control device 40 is configured to include: a nonvolatile memory in which a program is stored; a volatile memory (storage), which is a temporary storage area for executing the program; an input and output port; and a processor for executing the program, for example. Note that control device 40 may be implemented by a dedicated electronic circuit.

Speed sensor 30, acceleration sensor 31, crank rotation sensor 32, gyro sensor 33, torque sensor 34, vibration sensor 35, sound sensor 36, electric motor 43, operation unit 61, manual switch 62, battery 63, and the front light, for example, are electrically connected to control device 40. Operation signals from operation unit 61 and manual switch 62, as well as information indicating the detection results from the sensors are inputted to control device 40.

Control device 40 drives electric motor 43 according to an operation mode of electric bicycle 2. Specifically, control device 40 switches the operation mode among the assist mode, the walking mode, and the self-propelled mode and executes the respective modes. The assist mode is executed when the user is riding electric bicycle 2 after manual switch 62 has been pressed to turn on a power source. When the assist mode is executed, control device 40 determines a magnitude of the auxiliary driving force to be generated by electric motor 43 based on the pedal force applied to pedals 16 and the speed of electric bicycle 2, for example. The walking mode is executed when the user is not riding electric bicycle 2, manual switch 62 has been pressed to turn on the power source, and the user walks body 10 of electric bicycle 2. As with the walking mode, the self-propelled mode is executed when the user is not riding electric bicycle 2 and walks while supporting body 10 of electric bicycle 2. In the self-propelled mode, the user is not applying any force to push body 10 forward. When executing the walking mode, control device 40 also determines a magnitude of the auxiliary driving force to be generated by electric motor 43 based on the force for the user to walk electric bicycle 2 and the speed of electric bicycle 2, for example. When executing the self-propelled mode, control device 40 also determines a magnitude of a predetermined auxiliary driving force to be generated by electric motor 43.

Moreover, control device 40 provides power supplied from battery 63 to electric motor 43, the sensors, and the front light, for example.

In the embodiment, control device 40 is housed inside the casing in which electric motor 43 is housed, but is not limited to this. Control device 40 may be provided separately from electric motor 43.

Informer 50 is a communication module capable of wireless communication or wired communication with external device 3. Informer 50 can inform external device 3 about at least one of abnormal state information or normal state information, which is outputted by estimator 42 described later. Note that informer 50 may be able to communicate directly with a terminal device owned by the user riding electric bicycle 2. The terminal device is a smartphone, a tablet terminal, a personal computer, or a cycle computer, for example. In such a case, the terminal device corresponds to external device 3.

Operation unit 61 is provided in the vicinity of one of the pair of brake levers 81, for example. Operation unit 61 is an operation terminal such as a cycle computer including a light switch (illustration omitted) for turning on the front light, for example. Operation unit 61 includes buttons for receiving operations by the user, for example. The buttons are touch panel buttons or mechanical buttons, for example.

Operation unit 61 includes a display that displays state information (abnormal state information or normal state information) outputted by estimator 42 described later. The display is a liquid crystal display or an organic EL display, for example. Operation unit 61 may include a sounder, such as an electronic bell, for informing the surroundings of body 10 about the state information by means of a sound. The sounder may be a speaker for outputting a sound, for example. Operation unit 61 may be a vibrator for informing the user about the state information by means of vibration. The vibrator may be a vibration generating device having a vibration generating function (vibration function) for transmitting vibration to the user by causing operation unit 61 to vibrate. The vibration generating device may be a vibration motor that generates vibration, for example. Operation unit 61 may be a light source for informing the user about the state information by means of light. The light source may be an LED module that emits monochromatic light or multi-colored light, for example.

Manual switch 62 is a mechanical switch that receives a walk-the-vehicle operation or an operation for causing the vehicle to be self-propelled to execute the walking mode or the self-propelled mode. During a period in which manual switch 62 is being pressed by the user, operation unit 61 continues to output, to control device 40, a mode-on signal to execute the walking mode or the self-propelled mode. During a period in which no manual switch 62 is being pressed, on the other hand, operation unit 61 outputs no mode-on signal to control device 40.

If manual switch 62 is pressed once, then the walking mode or the self-propelled mode may be executed without manual switch 62 being pressed continuously. If manual switch 62 is pressed again during the execution of the walking mode or the self-propelled mode, the walking mode or the self-propelled mode may be stopped.

Battery 63 is a storage battery that stores electric power for driving electric motor 43, etc. Battery 63 is, for example, a secondary battery, but may be, for example, a capacitor. Battery 63 is electrically connected to electric motor 43. Specifically, battery 63 supplies electric power to electric motor 43, etc.

### [State Estimating System]

State estimating system 1 will be described next. State estimating system 1 includes obtainer 41, estimator 42, and informer 50. In the embodiment, obtainer 41 and estimator 42 are each implemented as a function of control device 40. Note that state estimating system 1 only needs to include at least obtainer 41 and estimator 42, and informer 50 may not be included in components of state estimating system 1.

Obtainer 41 obtains vibration information about vibration of a vehicle (electric bicycle 2). The vibration information may include, for example, information indicating mechanical vibration generated in a part of body 10, or information indicating sound emitted from a part of body 10. The vibration information may also include, for example, information indicating respective changes (vibration) in acceleration, angular velocity, or speed of the vehicle (electric bicycle 2), rotational speed of a wheel (front wheel 12 or rear wheel 13) of the vehicle, torque of electric motor 43 included in the vehicle, power consumed by battery 63 included in the vehicle, or strain, pressure, heat, or electromagnetic wave generated in the vehicle. More specifically, obtainer 41 may obtain the vibration information by detecting at least one of the acceleration, angular velocity, or speed of the vehicle (electric bicycle 2), the rotational speed of the wheel (front wheel 12 or rear wheel 13) of the vehicle, the torque of electric motor 43 included in the vehicle, the power consumed by battery 63 included in the vehicle, or the strain, pressure, heat, sound, or electromagnetic wave generated in the vehicle.

In the embodiment, obtainer 41 obtains the vibration information from a sensor provided in a target part used for estimating the state of the vehicle (electric bicycle 2). Here, the target part may include at least one of a drive mechanism that drives the wheel (front wheel 12 or rear wheel 13) of the vehicle, an electrical component (such as operation unit 61 or a light) included in the vehicle, or frame 11. When the target part is frame 11, for example, obtainer 41 obtains the vibration information from vibration sensor 35 or sound sensor 36 provided to frame 11.

Obtainer 41 may obtain the vibration information not from the sensor provided in the target part but from a sensor provided in the vicinity of the target part. When the target part is electric motor 43, for example, obtainer 41 may obtain the vibration information not from electric motor 43 but from vibration sensor 35 or sound sensor 36 provided in the vicinity of electric motor 43. In this case, the vibration information only needs to include at least information indirectly indicating the vibration of electric motor 43.

Estimator 42 estimates a state of the vehicle (electric bicycle 2) based on the vibration information obtained by obtainer 41. For example, estimator 42 estimates, as the state of the vehicle, a state of a component included in the vehicle. In other words, estimator 42 estimates, as the state of the vehicle, a state of the target part. Note that estimator 42 may estimate a state of the entire vehicle by considering the entire vehicle as the target part.

Here, the component is a component that belongs to a rotating mechanism that rotates as the vehicle travels, for example. Examples of such a component include at least one of chain 18, the gear, electric motor 43, the derailleur, the sprocket (rear sprocket 71 or front sprocket 72), pedal 16, crank 17, tire 12a or 13a, the wheel, a rim, or a hub.

Alternatively, the component is a component that does not belong to the rotating mechanism that rotates as the vehicle travels, for example. Examples of such a component include at least one of frame 11, a brake (a rim brake or a disc brake), a light (such as the front light), battery 63, a bolt lock, a suspension, or a kickstand.

Here, such a component (target part) described above is a component that generates or emits, when any abnormality occurs, vibration or sound different from that under normal conditions in which no abnormality occurs. In a case where frame 11 has deformation, for example, vibration generated in frame 11 may be different from that generated in frame 11 under the normal conditions. In this case, sound emitted from frame 11 may also be different from that emitted from frame 11 under the normal conditions. In any of the components other than frame 11, when any abnormality occurs, the component may generate vibration or emit sound different from that under the normal conditions.

Thus, estimator 42 compares the vibration information obtained by obtainer 41 with vibration information under normal conditions. When the obtained vibration information falls within a range of the vibration information under the normal conditions, estimator 42 can determine that the target part is in a normal state. When the obtained vibration information deviates from the range of the vibration information under the normal conditions, on the other hand, estimator 42 can determine that the target part has an abnormality.

For example, estimator 42 may determine whether the target part is in an abnormal state by determining, using a frequency of the vibration or the sound in the target part as the vibration information, whether the obtained frequency falls within a frequency range under the normal conditions. Alternatively, when the obtained frequency contains a specific frequency component that is not included in the frequency under the normal conditions, for example, estimator 42 may determine that the target part has an abnormality. Conversely, when the obtained frequency does not contain a specific frequency component that is included in the frequency under the normal conditions, estimator 42 may determine that the target part has an abnormality. Alternatively, estimator 42 may determine whether the target part is in an abnormal state or in a normal state by determining, using waveform data of the vibration or the sound in the target part as the vibration information, whether the obtained waveform data is substantially the same as waveform data under the normal conditions, for example.

For example, estimator 42 may estimate the state of the target part using at least one of a rule-based technique or a machine learning technique. For example, estimator 42 may use a preconstructed rule base to estimate the state of the target part based on the vibration information. In other words, by constructing, in advance, a rule base capable of determining an abnormal state of the target part based on the vibration information and a rule base capable of determining a normal state of the target part based on the vibration information, estimator 42 can determine whether the state of the target part is abnormal or normal based on the vibration information.

Estimator 42 may use, for example, a trained model, which has been constructed in advance by machine learning using training data, to estimate the state of the target part based on the vibration information. More specifically, by constructing, in advance, a trained model developed through machine learning to output either the abnormal state of the target part or the normal state of the target part using the vibration information as input, estimator 42 can determine whether the state of the target part is abnormal or normal.

By using at least one of the rule base or the trained model as just described, estimator 42 can determine whether chain 18 has an abnormality, such as chain 18 being loose, without visually checking chain 18, for example. When estimating the air pressure of tires 12a and 13a, for example, estimator 42 can estimate the air pressure of tires 12a and 13a by using at least one of the rule base or the trained model without providing a sensor for measuring such an air pressure in electric bicycle 2. The rule base or the trained model constructed using machine learning is stored, for example, in the storage included in control device 40.

Note that the rule base and the trained model constructed using machine learning may be updated as appropriate through, for example, retraining even after being stored in, for example, the storage of control device 40.

Estimator 42 outputs the abnormal state information or the normal state information based on the state of the vehicle (electric bicycle 2), which is the result of the estimation. For example, when the air pressure of tires 12a and 13a is estimated to be a low air pressure as the state of the vehicle, estimator 42 determines that the vehicle is in an abnormal state. When the air pressure of tires 12a and 13a is estimated to be a standard air pressure as the state of the vehicle, on the other hand, estimator 42 determines that the vehicle is in a normal state.

When the estimated state of the vehicle indicates that the vehicle is in an abnormal state, estimator 42 outputs the abnormal state information, which is information indicating that the vehicle has an abnormality. The abnormal state of the vehicle refers to a state in which some kind of malfunction is present in the vehicle. The abnormal state of the vehicle is, for example, a state in which the air pressure of tires 12a and 13a is equal to or less than a specified value (abnormality in air pressure of tires 12a and 13a). Examples of the abnormal state of the vehicle may also include states such as abnormalities in tires 12a and 13a including wear of tires 12a and 13a, and the occurrence of abnormal sound in tires 12a and 13a.

Furthermore, examples of the abnormal state of the vehicle may include a state in which frame 11 has deformation, a state in which rust has developed on the gear, the chain, or the sprocket, a state in which any of the spokes is broken or bent, or a state in which abnormal sound occurs in electric motor 43. Estimator 42 outputs the abnormal state information, which is the result of the estimation, to external device 3 via informer 50, or to operation unit 61 to inform the surroundings of the vehicle about the abnormal state information.

When the estimated state of the vehicle indicates that the vehicle is in a normal state, estimator 42 outputs the normal state information, which is information indicating that the vehicle has no abnormality. The normal state of the vehicle refers to a state in which no malfunction is present in the vehicle. The normal state of the vehicle is, for example, a state in which the air pressure of tires 12a and 13a falls within a predetermined range. Examples of the normal state of the vehicle may also include a state in which no abnormality is present in tires 12a and 13a, and a state in which no abnormal sound occurs in tires 12a and 13a.

Furthermore, examples of the normal state of the vehicle may include a state in which frame 11 has no deformation, a state in which no rust has developed on the gear, the chain, or the sprocket, a state in which no spokes are broken or bent, or a state in which no abnormal sound occurs in electric motor 43. Estimator 42 outputs the normal state information, which is the result of the estimation, to external device 3 via informer 50, or to operation unit 61 to inform the surroundings of the vehicle about the normal state information.

### [External Device]

External device 3 is a device that is present outside the state estimating system, e.g., a cloud server managed by a service provider that owns a plurality of vehicles (electric bicycles 2). External device 3 manages a state of each of the vehicles by collecting the state information (the abnormal state information or the normal state information) outputted from state estimating system 1. For each of the vehicles, external device 3 outputs the state of the vehicle to an informing device, such as a monitor, for the service provider. This enables the service provider to ascertain the timing for maintenance, such as repair or adjustment of the vehicle, in accordance with the state of the vehicle.

### (Operations)

An example of operations of state estimating system 1 (i.e., the state estimating method) according to the embodiment will be described below. FIG. 4 is a flowchart showing an example of the operations of state estimating system 1 according to the embodiment. The following describes an example in which state estimating system 1 estimates an air pressure of tires 12a and 13a as a state of the vehicle (electric bicycle 2). As a matter of course, state estimating system 1 may estimate different states of the vehicle other than the air pressure of tires 12a and 13a in accordance with the flow shown below.

First, obtainer 41 of state estimating system 1 obtains vibration information (S11). Here, obtainer 41 periodically obtains such vibration information by periodically obtaining a detection result of vibration sensor 35. Note that obtainer 41 may periodically obtain such vibration information by periodically obtaining a detection result of sound sensor 36.

Subsequently, estimator 42 of state estimating system 1 estimates a state of the vehicle based on the vibration information obtained by obtainer 41 (S12). Here, estimator 42 estimates an air pressure of tires 12a and 13a based on the detection result of vibration sensor 35. Note that estimator 42 may estimate the air pressure of tires 12a and 13a based on the detection result of sound sensor 36.

Subsequently, estimator 42 determines whether the vehicle is in an abnormal state based on the estimated state of the vehicle (S13). Here, estimator 42 determines whether tires 12a and 13a are in an abnormal state (i.e., whether the air pressure of tires 12a and 13a is equal to or less than the specified value) based on the estimated air pressure of tires 12a and 13a.

When the vehicle is determined to be in an abnormal state (S13: Yes), estimator 42 outputs abnormal state information, which is information indicating that the vehicle has an abnormality (S14). State estimating system 1 then terminates the operation.

As described above, estimator 42 outputs the abnormal state information, which is the result of the estimation, to external device 3 via informer 50 or to the display of operation unit 61. By collecting the abnormal state information, external device 3 can ascertain what kind of abnormality has occurred in the vehicle. Thus, the service provider can optimize the state of the vehicle (restore the vehicle to its normal state) by repairing or adjusting the vehicle. This allows the service provider to provide the user with the optimized vehicle. In addition, since operation unit 61 displays, on the display of operation unit 61, that the vehicle is in an abnormal state, the user of the vehicle can recognize that the vehicle is in an abnormal state. Thus, the user can stop using the vehicle, and then correct the abnormal state, for example, by filling tires 12a and 13a with air, or request the replacement of the vehicle from the service provider.

When the vehicle is determined to be in a normal state (S13: No) based on the estimated state of the vehicle, estimator 42 outputs normal state information, which is information indicating that the vehicle has no abnormality (S15). State estimating system 1 then terminates the operation.

As described above, estimator 42 outputs the normal state information, which is the result of the estimation, to external device 3 via informer 50 or to the display of operation unit 61. Thus, by collecting the normal state information, external device 3 can ascertain that the vehicle is in a normal state. In addition, since the display of operation unit 61 displays that the vehicle is in a normal state, the user can recognize that the vehicle is in a normal state. This allows the user to use the vehicle with a sense of security.

### [Functions and Effects]

Functions and effects of state estimating system 1 and the state estimating method in the embodiment will be described below.

As described above, state estimating system 1 according to a first aspect of the present disclosure includes obtainer 41 and estimator 42. Obtainer 41 obtains vibration information about vibration of a vehicle that is either a human-powered vehicle or electric bicycle 2. Estimator 42 estimates a state of the vehicle based on the vibration information obtained by obtainer 41. When the vehicle is determined to be in an abnormal state, estimator 42 outputs abnormal state information indicating that the vehicle has an abnormality. When the vehicle is determined to be in a normal state, estimator 42 outputs normal state information indicating that the vehicle has no abnormality.

According to this, the state of the vehicle can be estimated using the vibration information without providing an additional sensor for directly detecting the state of the vehicle. Thus, this provides an advantage of being able to easily eliminate the need for the sensor for directly detecting the state of the vehicle. This also provides an advantage of being able to easily suppress an increase in manufacturing costs.

In state estimating system 1 according to a second aspect of the present disclosure, estimator 42 in the first aspect estimates, as the state of the vehicle, a state of a component included in the vehicle.

This provides an advantage of being able to estimate the state of the component using the vibration information without providing a sensor for directly detecting the state of the component.

In state estimating system 1 according to a third aspect of the present disclosure, the component in the second aspect is a component that belongs to a rotating mechanism that rotates as the vehicle travels.

This provides an advantage of being able to estimate, using the vibration information, the state of the component that belongs to the rotating mechanism without providing a sensor for directly detecting the state of the component that belongs to the rotating mechanism.

In state estimating system 1 according to a fourth aspect of the present disclosure, the component in the second aspect is a component that does not belong to a rotating mechanism that rotates as the vehicle travels.

This provides an advantage of being able to estimate, using the vibration information, the state of the component that does not belong to the rotating mechanism without providing a sensor for directly detecting the state of the component that does not belong to the rotating mechanism.

In state estimating system 1 according to a fifth aspect of the present disclosure, obtainer 41 obtains, in any one of the first to fourth aspects, the vibration information by detecting at least one of an acceleration of the vehicle, an angular velocity of the vehicle, a speed of the vehicle, a rotational speed of a wheel (front wheel 12 or rear wheel 13) of the vehicle, torque of electric motor 43 included in the vehicle, power consumed by battery 63 included in the vehicle, or a strain, a pressure, heat, a sound, or an electromagnetic wave generated in the vehicle.

This provides an advantage of being able to estimate the state of the vehicle based on various types of vibrations which may be generated in the vehicle.

State estimating system 1 according to a sixth aspect of the present disclosure further includes, in any one of the first to fifth aspects, one or more sensors (vibration sensor(s) 35 or sound sensor(s) 36) provided in at least one of a drive mechanism that drives a wheel (front wheel 12 or rear wheel 13) of the vehicle, an electrical component (such as operation unit 61 or a light) included in the vehicle, or frame 11. Obtainer 41 obtains the vibration information from the one or more sensors.

According to this, the state of the target part can be estimated using the vibration information about the vibration generated in the target part. Thus, this provides an advantage of being able to expect an improvement in the accuracy of estimating the state of the target part.

State estimating system 1 according to a seventh aspect of the present disclosure further includes, in any one of the first to sixth aspects, informer 50 that informs external device 3 about at least one of the abnormal state information or the normal state information outputted by estimator 42.

According to this, external device 3 can obtain at least one of the abnormal state information or the normal state information. Thus, this provides an advantage of enabling the service provider using external device 3 to ascertain the state of the vehicle.

A state estimating method according to an eighth aspect of the present disclosure includes: obtaining vibration information about vibration of a vehicle that is either a human-powered vehicle or electric bicycle 2 (S11); and estimating a state of the vehicle based on the vibration information obtained (S12). In the state estimating method, when the vehicle is determined to be in an abnormal state (S13: Yes), abnormal state information indicating that the vehicle has an abnormality is outputted (S14). When the vehicle is determined to be in a normal state (S13: No), normal state information indicating that the vehicle has no abnormality is outputted (S15).

This provides the same advantages as those of state estimating system 1 described above.

### (Other Variations, etc.)

The present disclosure has been described above based on the embodiment, but the present disclosure is not limited to such embodiments, etc.

For example, obtainer 41 and estimator 42 of state estimating system 1 are provided in control device 40 of electric bicycle 2 in the embodiment described above, but the present disclosure is not limited to this. For example, obtainer 41 and estimator 42 may be provided in a part of electric bicycle 2 other than control device 40. Alternatively, obtainer 41 and estimator 42 may be provided in external device 3, for example. In this case, estimator 42 can also function as informer 50, and therefore informer 50 is unnecessary in electric bicycle 2. In this case, external device 3 may transmit and receive information to and from electric bicycle 2 by wirelessly communicating with electric bicycle 2.

Each of processing units used in state estimating system 1 and electric bicycle 2 (vehicle) according to each of the above-described embodiments is typically implemented as an LSI chip, which is an integrated circuit. These processing units may be implemented individually as a single chip, or may be implemented as a single chip to include some or all of the processing units.

Circuit integration is not limited to LSI, but may be implemented by a dedicated circuit or a general-purpose processor. A field programmable gate array (FPGA), which can be programmed after the manufacture of an LSI chip, or a reconfigurable processor, which can reconfigure the connections and settings of circuit cells inside an LSI chip, may also be used.

In the above-described embodiment, each of the elements may be configured by dedicated hardware or realized by executing a software program suitable for the element. Each of the elements may be realized as a result of a program executor, such as a CPU or a processor, reading and executing the software program recorded on a recording medium such as a hard disk or a semiconductor memory.

All numeric values used above are presented by way of example for the purpose of specifically describing the present disclosure. The embodiment of the present disclosure is not limited to the numeric values presented by way of example.

The division of the functional blocks in the block diagram is presented by way of example. A plurality of functional blocks may be implemented as a single functional block, a single functional block may be divided into a plurality of functional blocks, or some functions may be transferred to other functional blocks. The functions of a plurality of functional blocks with similar functions may be processed by a single piece of hardware or software in parallel or time-division.

The order in which the steps in the flowchart are executed is presented by way of example for the purpose of specifically describing the present disclosure, and therefore those steps may be executed in any order other than the order described above. Some of the above-described steps may be executed simultaneously (in parallel) with other steps.

Forms obtained by making various modifications to the embodiment that can be conceived by those skilled in the art, as well as forms obtained by combining structural components and functions in the embodiment, without materially departing from the spirit of the present disclosure, may be included in the scope of the present disclosure.

### [Reference Signs List]

- 1: state estimating system
- 2: electric bicycle (vehicle)
- 3: external device
- 12: front wheel (wheel)
- 13: rear wheel (wheel)
- 35: vibration sensor (sensor)
- 36: sound sensor (sensor)
- 41: obtainer
- 42: estimator
- 43: electric motor
- 50: informer
- 63: battery

## Claims

1. A state estimating system comprising:
an obtainer that obtains vibration information about vibration of a vehicle that is either a human-powered vehicle or an electric bicycle; and
an estimator that estimates a state of the vehicle based on the vibration information obtained by the obtainer,
wherein the estimator:
outputs, when the vehicle is determined to be in an abnormal state, abnormal state information indicating that the vehicle has an abnormality, and
outputs, when the vehicle is determined to be in a normal state, normal state information indicating that the vehicle has no abnormality.

2. The state estimating system according to claim 1,
wherein the estimator estimates, as the state of the vehicle, a state of a component included in the vehicle.

3. The state estimating system according to claim 2,
wherein the component is a component that belongs to a rotating mechanism that rotates as the vehicle travels.

4. The state estimating system according to claim 2,
wherein the component is a component that does not belong to a rotating mechanism that rotates as the vehicle travels.

5. The state estimating system according to any one of claims 1 to 4,
wherein the obtainer obtains the vibration information by detecting at least one of an acceleration of the vehicle, an angular velocity of the vehicle, a speed of the vehicle, a rotational speed of a wheel of the vehicle, torque of an electric motor included in the vehicle, power consumed by a battery included in the vehicle, or a strain, a pressure, heat, a sound, or an electromagnetic wave generated in the vehicle.

6. The state estimating system according to any one of claims 1 to 4, further comprising:
one or more sensors provided in at least one of a drive mechanism that drives the wheel of the vehicle, an electrical component included in the vehicle, or a frame,
wherein the obtainer obtains the vibration information from the one or more sensors.

7. The state estimating system according to any one of claims 1 to 4, further comprising:
an informer that informs an external device about at least one of the abnormal state information or the normal state information outputted by the estimator.

8. A state estimating method comprising:
obtaining vibration information about vibration of a vehicle that is either a human-powered vehicle or an electric bicycle; and
estimating a state of the vehicle based on the vibration information obtained,
wherein when the vehicle is determined to be in an abnormal state, abnormal state information indicating that the vehicle has an abnormality is outputted, and
when the vehicle is determined to be in a normal state, normal state information indicating that the vehicle has no abnormality is outputted.

## Amended claims

### Amended claims under Art. 19.1 PCT

**1.** A state estimating system comprising:
an obtainer that obtains vibration information about vibration of a vehicle that is either a human-powered vehicle or an electric bicycle; and
an estimator that estimates a state of the vehicle based on the vibration information obtained by the obtainer,
wherein by detecting at least one of an angular velocity of the vehicle, a speed of the vehicle, a rotational speed of a wheel of the vehicle, torque of an electric motor included in the vehicle, power consumed by a battery included in the vehicle, or a strain, a pressure, heat, a sound, or an electromagnetic wave generated in the vehicle, the obtainer obtains the vibration information indirectly from the at least one detected, and
the estimator:
outputs, when the vehicle is determined to be in an abnormal state, abnormal state information indicating that the vehicle has an abnormality, and
outputs, when the vehicle is determined to be in a normal state, normal state information indicating that the vehicle has no abnormality.

**2.** The state estimating system according to claim 1,
wherein the estimator estimates, as the state of the vehicle, a state of a component included in the vehicle.

**3.** The state estimating system according to claim 2,
wherein the component is a component that belongs to a rotating mechanism that rotates as the vehicle travels.

**4.** The state estimating system according to claim 2,
wherein the component is a component that does not belong to a rotating mechanism that rotates as the vehicle travels.

**6.** The state estimating system according to any one of claims 1 to 4, further comprising:
one or more sensors provided in at least one of a drive mechanism that drives the wheel of the vehicle, an electrical component included in the vehicle, or a frame,
wherein the obtainer obtains the vibration information from the one or more sensors.

**7.** The state estimating system according to any one of claims 1 to 4, further comprising:
an informer that informs an external device about at least one of the abnormal state information or the normal state information outputted by the estimator.

**8.** Currently amended) A state estimating method comprising:
obtaining, by an obtainer, vibration information about vibration of a vehicle that is either a human-powered vehicle or an electric bicycle;
estimating, by an estimator, a state of the vehicle based on the vibration information obtained;
by detecting at least one of an angular velocity of the vehicle, a speed of the vehicle, a rotational speed of a wheel of the vehicle, torque of an electric motor included in the vehicle, power consumed by a battery included in the vehicle, or a strain, a pressure, heat, a sound, or an electromagnetic wave generated in the vehicle, obtaining the vibration information by the obtainer indirectly from the at least one detected;
outputting by the estimator, when the vehicle is determined to be in an abnormal state by the estimator, abnormal state information indicating that the vehicle has an abnormality outputted; and
outputting by the estimator, when the vehicle is determined to be in a normal state by the estimator, normal state information indicating that the vehicle has no abnormality.
